# EUROPÄISCHE PATENTSCHRIFT

(11) **EP 0 527 989 B1**
(45) Veröffentlichungstag und Bekanntmachung des Hinweises auf die Patenterteilung: **03.07.1996**
(21) Anmeldenummer: 92905472.4
(22) Anmeldetag: 27.02.1992
(51) Int. Cl.: B01D 53/22

(54) **VERFAHREN UND VORRICHTUNG ZUM TRENNEN VON GASEN DURCH OBERFLÄCHENDIFFUSION**
PROCESS AND DEVICE FOR SEPARATING GASES BY SURFACE DIFFUSION
PROCEDE ET DISPOSITIF POUR LA SEPARATION DE GAZ PAR DIFFUSION SUPERFICIELLE

(30) Priorität: 06.03.1991 DE 4107089
(43) Veröffentlichungstag der Anmeldung: 24.02.1993
(73) Patentinhaber: Deutsche Forschungsanstalt für Luft- und Raumfahrt e.V., D-51126 Köln (DE)
(72) Erfinder: NEUHAUS, Dietmar, D-4000 Düsseldorf 13 (DE)
(74) Vertreter: Hilleringmann, Jochen, Dipl.-Ing.
(86) Internationale Anmeldenummer: EP9200422
(87) Internationale Veröffentlichungsnummer: WO9215389

(56) Entgegenhaltungen:
- EP-A- 0 199 844
- EP-A- 0 405 288
- EP-A- 0 428 052
- US-A- 3 232 026
- Journal of Chemical Engineering of Japan, vol. 19, No. 1, 1986, Seiten 72-77, Masashi Asaeda und Luong Dinh Du: "Separation of alcohol/water gaseous mixtures by thin ceramic membrane"

## Beschreibung

Die Erfindung betrifft ein Verfahren und eine Vorrichtung zum Trennen von Gasen in Gasgemischen und von durch Dissoziation an Oberflächen entstandenen Gasmolekül-Bruchstücken durch Oberflächendiffusion.

Verfahren und Vorrichtungen zum Trennen von Gasen unter Verwendung von Filtern oder mit Hilfe von Zentrifugen sind bekannt. Die Trennung der Gase bei Verwendung von Filtern beruht im wesentlichen darauf, daß das Filter von dem Gasgemisch durchströmt wird, wobei bestimmte Gase vom Filter zurückgehalten werden, während andere Gase das Filter durchströmen. Die Trennung von Gasen mit Hilfe von Zentrifugen beruht dagegen auf den Masseunterschieden der zu trennenden Gase. Oberflächendiffusionserscheinungen spielen in beiden Fällen keinerlei Rolle. Die Trennung von Gasen kann jedoch je nach Zusammensetzung des Gasgemisches aufgrund der für unterschiedliche Gase in Abhängigkeit von der Oberfläche verschieden schnell ablaufenden Oberflächendiffusionen recht wirkungsvoll ausgenutzt werden.

Aus der EP-A-0 428 052 (Anmeldedatum 07.11.90 und Veröffentlichungsdatum 22.05.91) ist ein Verfahren zur Gastrennung unter Verwendung einer porösen Adsorptionsmembran bekannt. Das zu trennende Gasgemisch dringt durch diese Membran hindurch, die - in Transportrichtung betrachtet - zwei Schichten aufweist, welche unterschiedliche Eigenschaften in Bezug auf den Gastransport und die Gastrennung aufweisen. Bei diesem Verfahren kommen unterschiedliche Mechanismen zur Gastrennung zur Anwendung, wobei einer davon unter Ausnutzung der Diffusion adsorbierter Gaskomponenten in Form eines Oberflächenflusses durch die Poren der Membran erfolgt. Ferner weisen die Poren in dem Membranmaterial eine spezifische Größenverteilung in Abhängigkeit von Durchmessern der Moleküle des zu trennenden Gasgemisches auf.

In Journal Of Chemical Engineering Of Japan, vol. 19, No. 1, 1986, Seiten 72-77, Masashi Asaeda und Luong Dinh Du: "Separation of alcohol/water gaseous mixtures by thin ceramic membrane" ist ein Verfahren zum Trennen eines (Gas-)Gemisches aus Wasser und Alkohol (Methanol, Ethanol und Isopropanol) mittels einer dünnen porösen Membran beschrieben. Als ein Mechanismus zum Trennen der unterschiedlichen Bestandteile des Gasgemisches ist die Oberflächendiffusion an den Wänden der Poren der Membran beschrieben, wobei für den Trennungsprozeß lediglich die Moleküle eines Bestandteils des Gemisches an den Porenwänden adsorbieren, und demzufolge lediglich ein Bestandteil des Gemisches mittels Oberflächendiffusion durch die poröse Membran transportiert wird.

Der Erfindung liegt die Aufgabe zugrunde, ein Verfahren sowie eine Vorrichtung zum Trennen von Gasen und/oder von durch Dissoziation an Oberflächen entstandenen Gasmolekül-Bruchstücken unter Ausnutzung von Oberflächendiffusionserscheinungen zu schaffen.

Diese Aufgabe wird durch die Merkmale des Anspruchs 1, beziehungsweise durch die Merkmale des Anspruchs 9 gelöst.

Zur Lösung dieser Aufgabe wird mit der Erfindung eine Vorrichtung vorgeschlagen, bei dem als Filter ein Festkörper verwendet wird, durch den hindurch der Gastransport im wesentlichen ausschließlich durch Oberflächendiffusion erfolgt. Der Festkörper ist in der Auslaßöffnung einer Kammer für das Gasgemisch angeordnet. Der Festkörper ist mit mehreren Durchlässen versehen, die entweder im nachhinein in dem Festkörper ausgebildet worden sind oder bei der Herstellung des Festkörpers entstehen. Der Strömungswiderstand, den die Durchlässe des Festkörpers repräsentieren, wird durch entsprechende Wahl der Querschnittsflächen (in erster Linie durch Wahl der Größe der Querschnittsflächen; zweitrangig aber auch durch Wahl der Querschnittsflächenform) derart hoch eingestellt, daß der Gasgemischtransport durch den Festkörper im wesentlichen durch Oberflächendiffusion an den Durchlaßinnenflächen erfolgt. Die erfindungsgemäße Vorrichtung ist ferner mit einer Heizvorrichtung zum Erwärmen des Festkörpers versehen. Die Erwärmung des Festkörpers kann durch direkte Wärmeübertragung von der Heizvorrichtung auf den Festkörper, aber auch durch Wärmestrahlung erfolgen.

Allgemein gilt, daß der Gastransport durch einen mit Durchlässen durchsetzten Festkörper (nachfolgend auch Substrat genannt) auf zweierlei Arten erfolgen kann. Zum Gastransport trägt zum einen die Gasströmung durch die Durchlässe und zum anderen die Oberflächendiffusion von an den Durchlaßwandungen adsorbierten Gasteilchen bei. Während die Gasströmung von der Geometrie der Durchlässe abhängt, wird der Gasteilchentransport infolge Diffusion entlang der Oberflächen der Durchlaßwandungen durch die Substrat/Adsorbat-Wechselwirkung bestimmt. Durch geeignete Wahl der Geometrie der Durchlässe (die Durchlässe müssen beispielsweise hinreichend eng sein) wird der Strömungswiderstand, den die Durchlässe für die Gasströmung darstellen, derart groß, daß der Anteil des Gastransports durch Gasströmung vernachlässigt werden kann, der Gastransport durch den Festkörper also im wesentlichen von der Oberflächendiffusion der Gasteilchen dominiert wird. Nach der Erfindung wird gerade ein solcher Gas adsorbierender Festkörper zum Trennen von Gasen aus Gasgemischen eingesetzt. Der Gastransport durch einen solchen Festkörper kann durch Wahl des Substrats kontrolliert werden.

Durch die Gas/Substrat-Kombination ist die Substrat/Adsorbat-Wechselwirkung bestimmt. Darüberhinaus ist die Substrat/Adsorbat-Wechselwirkung aber auch eine Funktion der Substrattemperatur. Bei unterschiedlichen Adsorbaten auf dem Substrat stellen sich auch unterschiedliche Diffusionsgeschwindigkeiten an der Substratoberfläche ein. Der nach der Erfindung verwendete Festkörper, bei dem der Gastransport nahezu ausschließlich durch Oberflächendiffusion der adsorbierten Gasteilchen erfolgt, zeigt also für verschiedene Gase unterschiedliche Durchlässigkeiten. Da die Eigenschaften der auf dem Festkörper adsorbierten Teilchen der unterschiedlichen Gase wesentlich durch die Temperatur des Festkörpers beeinflußt werden können, lassen sich nach der Erfindung durch die Möglichkeit, den Festkörper zu erwärmen, die Diffusionseigenschaften durch geeignete Wahl der Temperatur und insbesondere durch eine Temperaturverteilung in dem Festkörper beeinflussen.

Vom Adsorptionsvorgang ist es abhängig, welche der Gasteilchen mit welcher Geschwindigkeit durch Oberflächendiffusion transportiert werden. Es ist beispielsweise möglich, daß die Adsorption eines Moleküls auf dem Festkörper die sofortige Dissoziation in "Bruchstücke" zur Folge hat, so daß anschließend ausschließlich die vorzugsweise gesättigten Bruchstücke durch Oberflächendiffusion transportiert werden und letztlich auch nur die Bruchstücke wieder desorbieren. In diesem Fall macht es keinen Unterschied, ob im Gasgemisch das Molekül oder aber die Bruchstücke des Moleküls vorhanden sind. Es ist außerdem möglich, daß sich zumindest ein Teil der Bruchstücke nach dem Transport durch Diffusion und vor der Desorption zu den ursprünglichen Molekülen zurückbilden, welche dann desorbieren. Es ist weiter möglich, daß die Bruchstücke oder einige der Bruchstücke sich zu neuen Molekülen zusammensetzen, welche dann desorbieren.

Die Eigenschaften des Substrats können durch (zuvor) adsorbierte Gase in der Weise verändert werden, daß die zu transportierenden adsorbierten Gase in ihren Diffusionseigenschaften, insbesondere bezüglich ihrer Diffusionsgeschwindigkeit beeinflußt werden. Durch Adsorption eines Gases wird die Oberfläche der Durchlässe verändert. Ein Gas, das mit dieser mit adsorbiertem Gas versehenen Oberfläche in Berührung gelangt, "sieht" nicht mehr den "reinen" Festkörper sondern den durch (zuvor) adsorbierte Gas verunreinigten Festkörper. Mithin stellen sich andere Adsorbat/Substrat-Wechselwirkungen (das Substrat entspricht in diesem Fall dem mit dem adsorbierten Gas verunreinigten Festkörper) und somit andere Diffusionseigenschaften und -geschwindigkeiten ein, was wiederum zur Trennung der Gase ausgenutzt werden kann.

In vorteilhafter Weiterbildung der Erfindung ist vorgesehen, daß bei einem aus zwei Gasen bestehenden Gasgemisch der Festkörper auf eine Temperatur erwärmt wird, die im Bereich zwischen den Desorptionstemperaturen der beiden Gase liegt. Der Gastransport durch Oberflächendiffusion durch den nach der Erfindung verwendeten Festkörper kann nur dann erfolgen, wenn die Gasteilchen auf dem Festkörper adsorbiert sind. Wenn es also gelingt, bestimmte Teilchen eines Gasgemisches zu adsorbieren und gleichzeitig andere zu desorbieren oder an einer Adsorption zu hindern, werden die desorbierten Gasteilchen vom Festkörper zurückgehalten. Der Gastransport der desorbierten Gasteilchen durch den Festkörper könnte nämlich nur dann erfolgen, wenn der Festkörper einen Gastransport durch Gasströmung zuließe. Da dies bei dem nach der Erfindung verwendeten Festkörper praktisch ausgeschlossen ist, kann der Festkörper durch Einstellen seiner Temperatur in einen Zustand versetzt werden, in dem er für ein Gas des Gasgemisches (nämlich das adsorbierte) durchlässig ist, während er für das andere Gas des Gasgemisches (nämlich das desorbierte) undurchlässig ist. Dasjenige Gas des Gasgemisches, dessen Desorptionstemperatur kleiner ist als die gewählte Festkörpertemperatur desorbiert und wird an einem Transport durch den Festkörper gehindert; dasjenige Gas, dessen Desorptionstemperatur höher ist als die gewählte Festkörpertemperatur, kann den Festkörper durch Oberflächendiffusion passieren.

In vorteilhafter Weiterbildung der Erfindung ist vorgesehen, daß der Festkörper derart beschaffen ist, daß an ihm lediglich die Teilchen desjenigen Gases absorbieren, das aus dem Gasgemisch extrahiert werden soll, oder aber daß am Festkörper die Teilchen sämtlicher Gase mit Ausnahme des zu trennenden Gases adsorbieren. Die hierfür erforderlichen Eigenschaften des Festkörpers sind in erster Linie eine Frage der "Oberflächenreinheit bzw. -verschmutzung". Ein Festkörper mit einer Einkristalloberfläche weist andere Adsorptionseigenschaften auf als ein Festkörper, dessen Kristalloberfläche durch Fremdatome verunreinigt ist.

Vorteilhafterweise besteht der Festkörper aus inertem Material, damit die Wiederholbarkeit gewährleistet ist. Als inertes Material werden vorteilhafterweise katalytisch wirkende Metalle, insbesondere Platin, verwendet. Der Festkörper selbst liegt vorteilhafterweise als Sinterkörper vor, wobei die Durchlässe durch die Zwischenräume zwischen den Sintermaterialpartikeln gebildet sind. Bei dem Festkörper handelt es sich also vorzugsweise um einen "offenzelligen" Körper. Der Festkörper kann aber auch als Wickelkörper ausgebildet sein und aus einem dünnen strukturierten aufgewickelten Materialstreifen bestehen.

Es ist grundsätzlich bekannt, daß jedes inerte (Katalysator-)Material seine spezifischen Adsorptions-, Desorptions- und Diffusionseigenschaften für Gasmoleküle und Gasmolekül-Bruchstücke besitzt. Diese spezifischen Eigenschaften der inerten Materialien werden erfindungsgemäß ausgenutzt, und zwar je nach dem, welche Gasmoleküle und/oder -Bruchstücke getrennt oder transportiert werden sollen.

Bei dem mit der erfindungsgemäßen Vorrichtung und dem erfindungsgemäßen Verfahren auftrennbaren Gasgemisch muß es sich nicht notwendigerweise um ein Gemisch aus Gasen handeln, deren Atome ungleiche Kernladungszahlen haben. Vielmehr ist entscheidend, daß das Gasgemisch Gasteilchen mit unterschiedlichen Adsorptions- und/oder Diffusionseigenschaften in Bezug auf ein Substrat beinhaltet. Mit der Erfindung läßt sich nämlich auch beispielsweise eine Isotopentrennung durchführen. Die unterschiedliche Masse der Atome der Isotopen verleihen diesen unterschiedliche Diffusionseigenschaften, insbesondere unterschiedliche Diffusionsgeschwindigkeiten, weshalb eine Trennung eines Isotopengasgemisches mit der erfindungsgemäßen Lehre möglich ist.

Nachfolgend wird anhand der Figuren ein Ausführungsbeispiel der Erfindung näher erläutert. Im einzelnen zeigen:
- Fig. 1: schematisch eine Vorrichtung zum Trennen von Gasen in einem Gasgemisch und zum Transportieren von Gas und
- Fig. 2: in stark vergrößertem Maßstab eine Darstellung des in der Vorrichtung nach Fig. 1 verwendeten Sintermetall-Festkörpers.

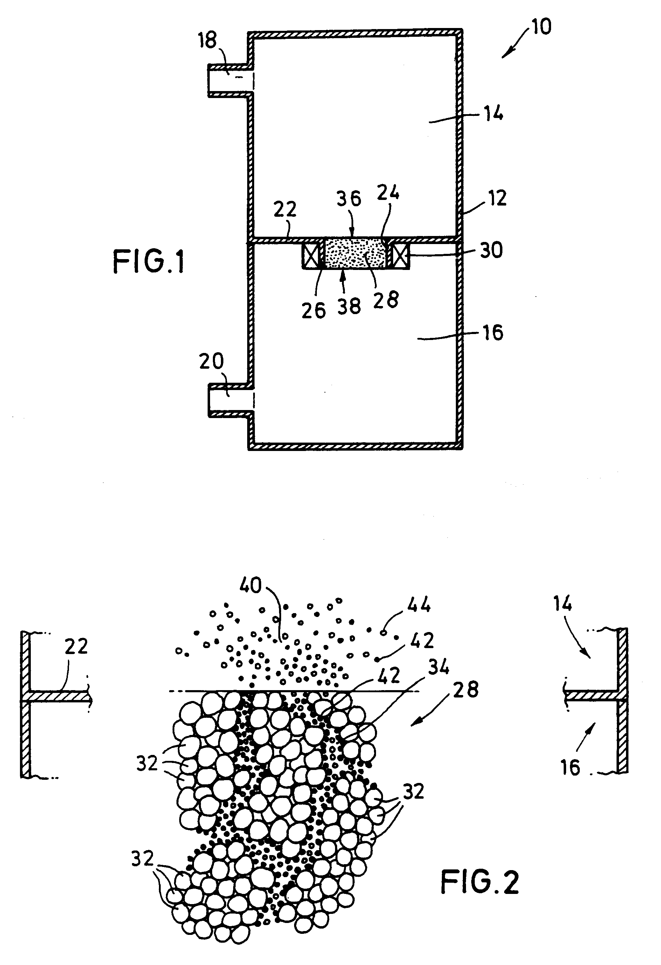

In Fig. 1 ist im Querschnitt eine Vorrichtung 10 zum Trennen von Gasen dargestellt. Die Vorrichtung 10 weist ein Gehäuse 12 auf, in dem zwei Kammern 14,16 ausgebildet sind. Das Gehäuse 12 ist im Bereich der ersten Kammer 14 mit einer Gaseintrittsöffnung 18 versehen, während im Bereich der zweiten Kammer 16 eine Gasaustrittsöffnung 20 im Gehäuse 12 angeordnet ist. Innerhalb des Gehäuses 12 befindet sich eine Trennwand 22, die das Gehäuse 12 in die beiden Kammern 14,16 unterteilt. Die Zwischenwand 22 ist mit einer Öffnung 24 versehen. An der Zwischenwand 22 ist ein die Öffnung 24 umgebender Kragen 26 nach Art eines Stutzens angeformt. Der Stutzen ist über seine gesamte Länge von einem Festkörper 28 ausgefüllt, der sich über den gesamten Querschnitt des Stutzens und der Öffnung 24 erstreckt. Außerhalb des Stutzens befindet sich eine Heizvorrichtung 30 zum Erwärmen des Festkörpers 28. Die Heizvorrichtung weist mehrere einzeln ansteuerbare Heizelemente auf, mit denen der Festkörper 28 bereichsweise unterschiedlich stark erwärmt werden kann. Mit der Heizvorrichtung 30 läßt sich also dem Festkörper 28 - in Strömungsrichtung des Gases betrachtet - ein bestimmtes Temperaturprofil, beispielsweise ein Temperaturgradient, aufprägen.

Wie in Fig. 2 angedeutet, handelt es sich bei dem Festkörper 28 um einen Sinterkörper` Bei dem Sintermaterial handelt es sich um Platin. Zwischen den Platinpartikeln 32 sind Durchlässe 34 ausgebildet, die den Festkörper 28 wie Kanäle von dem der Kammer 14 zugewandten Eintrittsende 36 bis zu dem der Kammer 16 zugewandten Austrittsende 38 durchziehen. Über die Durchlässe 34 sind die beiden Kammern 14 und 16 miteinander verbunden. Die Durchlässe 34 entstehen beim Sintern der Partikel 32 und weisen eine extrem kleine Querschnittsfläche auf. Aufgrund dieser extrem kleinen Querschnittsfläche und der Geometrie stellen die Durchlässe 34 einen extrem hohen Strömungswiderstand für ein in die Kammer 14 einströmendes Gas bzw. Gasgemisch 40 dar.

Der Gastransport durch die Durchlässe 34 des Festkörpers 28 erfolgt, wie in Fig. 2 angedeutet, nahezu ausschließlich durch Diffusion von an den Platin-Sinterpartikeln 32 des Festkörpers 28 adsorbierten Gasteilchen 42 entlang der Innenfläche der Wandungen der Durchlässe 34 (Oberflächendiffusion); jedenfalls dominiert der Gastransport durch Oberflächendiffusion demjenigen durch Gasströmung bei weitem. Wie in Fig. 2 dargestellt, besteht das über die Eintrittsöffnung 18 in die Kammer 14 eingelassene Gasgemisch 40 aus Gasteilchen 42 (schwarze Punkte) und Gasteilchen 44 mit unterschiedlichen Desorptionstemperaturen. Die Heizvorrichtung 30 erwärmt den Festkörper 28 auf eine Temperatur, bei der die Gasteilchen 42 auf den Innenflächen der Durchlaßwandungen adsorbiert werden, während die Gasteilchen 44 desorbieren. Die Temperatur des Festkörpers 28 liegt also zwischen der Desorptionstemperatur der Gasteilchen 44 und derjenigen der Gasteilchen 42. Aufgrund seiner sehr schmalen und engen Durchlässe 34 stellt der Festkörper 28 für die desorbierten Gasteilchen 44 einen hohen Strömungswiderstand dar, weshalb die desorbierten Gasteilchen 44 den Festkörper 28 praktisch nicht passieren und nicht in die Kammer 16 gelangen, wenn das Gasgemisch 40 mit Druck in die Kammer 14 eingeleitet und durch den Festkörper 28 gepreßt wird. Durch den Festkörper 28 transportiert werden die an den Sinterpartikeln 32 adsorbierten Gasteilchen 42, die infolge des gegenüber der Kammer 16 höheren Druckes des Gasgemisches 40 in der Kammer 14 den Festkörper durch Oberflächendiffusion an den Durchlaßwandungen passieren und in die Kammer 16 gelangen. Durch Erhöhung der Temperatur des Festkörpers 28 an dessen Austrittsende bis oberhalb der Desorptionstemperatur der Gasteilchen 42 lösen sich diese vom Festkörper 28, um frei in der Kammer 16 zu schweben und über die Austrittsöffnung 20 aus der Kammer 16 abgeführt zu werden. Aus dem in der Kammer 14 befindlichen Gasgemisch 40 ist somit ein Gas, nämlich die Gasteilchen 42, herausgetrennt worden.

Die in Fig. 1 dargestellte Vorrichtung zum Trennen von Gasen in Gasgemischen kann auch zum Transportieren bzw. Pumpen von Gasen aus der Kammer 14 in die Kammer 16 eingesetzt werden. Zu diesem Zweck wird dem Festkörper 28 über die Heizvorrichtung 30 ein Temperaturgradient aufgeprägt, wobei das Eintrittsende 36 auf eine niedrige erste Temperatur, bei der die zu transportierenden Gasteilchen an den Durchlaßwandungen adsorbieren, und das Austrittsende 38 auf eine höhere zweite Temperatur erwärmt wird, die oberhalb der Desorptionstemperatur der zu transportierenden Gasteilchen liegt. Das Gas in der Kammer 14 adsorbiert am Festkörper 28 im Bereich von dessen Eintrittsende 36, wird durch Diffusion entlang der Durchlaßwandungen auf den Oberflächen aneinander angrenzender Sinterpartikel 32 bis zum Austrittsende 38 transportiert, wo es aufgrund der höheren Temperatur desorbiert und in die Kammer 16 gelangt. Da bei konstanter Bedeckung der Durchlaßwandungen mit Gasteilchen der Gleichgewichtsdruck der Gasphase mit zunehmender Temperatur steigt, weist das Gas in der Kammer 16 einen höheren Druck auf als das Gas in der Kammer 14. Insoweit ist die Vorrichtung 10, wenn sie zum Transport eines Gases eingesetzt wird, mit einer (Gas-) Pumpe vergleichbar.

## Patentansprüche

1. Vorrichtung zur Trennung von Gasen in Gasgemischen und/oder von durch Dissoziation an Oberflächen entstandenen Gasmolekül-Bruchstücken durch Oberflächendiffusion, mit
- einer eine Auslaßöffnung (24) aufweisenden Kammer (14) für das Gasgemisch (40) und/oder die Gasmolekül-Bruchstücke,
- einem in der Auslaßöffnung (24) angeordneten gasadsorbierenden Festkörper (28), der von einer Vielzahl von Durchlässen (34) durchsetzt ist, wobei der Strömungswiderstand der Durchlässe (34) durch entsprechende Wahl der Querschnittsflächen der Durchlässen (34) derart hoch ist, daß der Gasgemischtransport und/oder der Transport der Gasmolekül-Bruchstücke durch den Festkörper (28) nahezu ausschließlich durch Diffusion entlang der Durchlaß-Oberflächen erfolgt, und
- einer Heizvorrichtung (30) zum Erwärmen des Festkörpers (28).

2. Vorrichtung nach Anspruch 1, dadurch gekennzeichnet, daß die Heizvorrichtung (30) den Festkörper (28) auf eine Temperatur erwärmt, die unterhalb der Desorptionstemperatur desjenigen Gases des Gasgemisches (40) und/oder desjenigen Gasmolekül-Bruchstückes liegt, das den Festkörper (28) durchdringen soll, und oberhalb der Desorptionstemperatur des mindestens einen anderen Gases des Gasgemisches (40) und/oder des mindestens einen anderen Gasmolekül-Bruchstückes liegt.

3. Vorrichtung nach Anspruch 1, dadurch gekennzeichnet, daß die Diffusionsgeschwindigkeiten für die einzelnen Gase (42,44) des Gasgemisches (40) und/oder für die einzelnen Gasmolekül-Bruchstücke entlang der Oberfläche der Durchlässe (34) infolge der Erwärmung des Festkörpers (28) oder des Materials des Festkörpers (28) oder der Beschaffenheit des Festkörpers (28) unterschiedlich ist, wobei die Trennung der Gase (42,44) und/oder Gasmolekül-Bruchstücke unter Ausnutzung dieser unterschiedlichen Diffusionsgeschwindigkeiten erfolgt.

4. Vorrichtung nach einem der Ansprüche 1 bis 3, dadurch gekennzeichnet, daß der Festkörper (28) aus inertem Material besteht.

5. Vorrichtung nach einem der Ansprüche 1 bis 3, dadurch gekennzeichnet, daß der Festkörper (28) aus einem Katalysator-Material besteht.

6. Vorrichtung nach einem der Ansprüche 1 bis 5, dadurch gekennzeichnet, daß der Festkörper (28) aus Platin besteht.

7. Vorrichtung nach einem der Ansprüche 1 bis 6, dadurch gekennzeichnet, daß der Festkörper (28) ein Sinterkörper ist, wobei die Durchlässe (34) durch die Zwischenräume zwischen den Partikeln (32) des Sintermaterials gebildet sind.

8. Vorrichtung nach einem der Ansprüche 1 bis 6, dadurch gekennzeichnet, daß der Festkörper (28) ein Wickelkörper ist, der aus einem dünnen strukturierten aufgewickelten Materialstreifen besteht.

9. Verfahren zum Trennen von Gasen in Gasgemischen und/oder von durch Dissoziation an Oberflächen entstandenen Gasmolekül-Bruchstücken durch Oberflächendiffusion, bei dem
- das Gasgemisch (40) und/oder die Gasmolekül-Bruchstücke durch einen gasadsorbierenden Festkörper (28) transportiert wird, der von einer Vielzahl von Durchlässen (34) durchsetzt ist, deren Querschnittsflächen derart gewählt sind, daß der Gastransport und/oder der Transport der Gasmolekül-Bruchstücke durch den Festkörper (28) im wesentlichen ausschließlich durch Diffusion entlang der Durchlaß-Oberflächen erfolgt und daß die Trennung der Gase (42,44) und/oder der Gasmolekül-Bruchstücke unter Ausnutzung der für diese unterschiedlichen Diffusionsgeschwindigkeiten erfolgt, und
- der Festkörper (28) mittels einer Heizvorrichtung (30) erwärmt wird.

10. Verfahren nach Anspruch 9, dadurch gekennzeichnet, daß bei einem aus zwei Gasen (42,44) bestehenden Gasgemisch (40) oder bei zwei Gasmolekül-Bruchstücken oder bei einem Gas und einem Gasmolekül-Bruchstück der Festkörper (28) auf eine Temperatur erwärmt wird, die im Bereich zwischen den Desorptionstemperaturen der beiden Gase (42,44) oder der beiden Gasmolekül-Bruchstücken oder des Gases und des Gasmolekül-Bruchstücks liegt.

11. Verfahren nach Anspruch 9 oder 10, dadurch gekennzeichnet, daß die Trennung der Gase und/oder der Gasmolekül-Bruchstücke unter Ausnutzung der sich infolge der Erwärmung des Festkörpers (28) oder des Materials des Festkörpers (28) oder der Beschaffenheit des Festkörpers (28) einstellenden unterschiedlichen Oberflächendiffusionsgeschwindigkeiten erfolgt.

12. Verfahren nach einem der Ansprüche 9 bis 11, dadurch gekennzeichnet, daß die Molekül-Bruchstücke und/ oder Verbindungen von Molekül-Bruchstücken nach dem Transport durch den Festkörper (28) hindurch desorbieren.

13. Verfahren nach einem der Ansprüche 9 bis 12, dadurch gekennzeichnet, daß die Diffusionseigenschaften, insbesondere die Diffusionseigenschaft des adsorbierten zu transportierenden Gases und/oder der zu transportierenden Gasmolekül-Bruchstücke beeinflußt werden, indem die Oberfläche der Durchlässe durch adsorbiertes Gas und/oder Gasmolekül-Bruchstücke verändert wird.

## Claims

1. A device for the separation of gases in gas mixtures and/or of gas molecule fragments generated by dissociation on surfaces by surface diffusion, comprising
- a chamber (14) for the gas mixture (40) and/or the gas molecule fragments, said chamber (14) comprising an outlet opening (24),
- a gas-adsorbing solid body (28) arranged in the outlet opening (24) and having a plurality of passages (34) formed therein, the flow resistance of the passages (34), through corresponding selection of the cross-sectional areas of the passages (34), having such a value that the conveyance of the gas mixture and/or the conveyance of the gas molecule fragments through the solid body (28) is performed almost exclusively by diffusion along the surfaces of the passages, and
- a heater means (30) for heating the solid body (28).

2. The device according to claim 1, characterized in that the heater means (30) heats the solid body (28) to a temperature which lies below the desorption temperature of that gas of the gas mixture (40) and/or of that gas molecule fragment which shall pass through the solid body (28), and which lies above the desorption temperature of the at least one other gas of the gas mixture (40) and/or of the at least one other gas molecule fragment.

3. The device according to claim 1, characterized in that the diffusion speeds for the individual gases (42,44) of the gas mixture (40) and/or for the individual gas molecule fragments is different along the surface of the passages (34) because of the heating of the solid body (28) or the material of the solid body (28) or the nature of the solid body (28), the separation of the gases (42,44) and/or of the gas molecule fragments being performed by use of these different diffusion speeds.

4. The device according to any of claims 1 to 3, characterized in that the solid body (28) comprises inert material.

5. The device according to any of one claims 1 to 3, characterized in that the solid body (28) comprises a catalyst material.

6. The device according to any of one claims 1 to 5, characterized in that the solid body (28) comprises platinum.

7. The device according to any of one claims 1 to 6, characterized in that the solid body (28) is a sintered body, the passages (34) being formed by the spaces between the particles (32) of the sintered material.

8. The device according to any of one claims 1 to 6, characterized in that the solid body (28) is a coil body comprising a thin, structured, wound-up strip of material.

9. A method for the separation of gases in gas mixtures and/or of gas molecule fragments generated by dissociation on surfaces by surface diffusion, wherein
- the gas mixture (40) and/or the gas molecule fragments are conveyed through a gas-adsorbing solid body (28) having a plurality of passages (34) formed therein, the cross-sectional areas of said passages (34) being selected in such a manner that the conveyance of the gas and/or the conveyance of the gas molecule fragments through the solid body (28) is performed substantially exclusively by diffusion along the surfaces of the passages and that the separation of the gases (42,44) and/or of the gas molecule fragments is performed by use of the different diffusion speeds thereof, and
- the solid body (28) is heated by a heater means (30).

10. The method according to claim 9, characterized in that, with a gas mixture (40) comprising two gases (42,44) or with two gas molecule fragments or with a gas and a gas molecule fragment, the solid body (28) is heated to a temperature in the range between the desorption temperatures of said two gases (42,44) or of said two gas molecule fragments or of said gas and said gas molecule fragment.

11. The method according to claim 9 or 10, characterized in that the separation of the gases and/or of the gas molecule fragments is performed by use of the different surface diffusion speeds resultant from the heating of the solid body (28) or the material or the nature of the solid body (28).

12. The method according to any one of claims 9 to 11, characterized in that the molecule fragments and/or compounds of molecule fragments are desorbed after conveyance through the solid body (28).

13. The method according to any one of claims 9 to 12, characterized in that the diffusion properties, particularly the diffusion property of the adsorbed gas to be conveyed or of the gas molecule fragments to be conveyed, are influenced by changing the surface of the passages by adsorbed gas and/or gas molecule fragments.

## Revendications

1. Dispositif pour la séparation de gaz dans des mélanges gazeux et/ou de fragments moléculaires gazeux créés par une dissociation au niveau des surfaces à l'aide d'une diffusion superficielle, comportant
- une chambre (14) présentant une ouverture d'échappement (24) pour le mélange gazeux (40) et/ou les fragments moléculaires gazeux,
- un corps solide (28) absorbant les gaz disposé dans l'ouverture d'échappement (24) qui est traversé par une pluralité de passages (34), dans lequel la résistance à l'écoulement des passages (34) est rendue élevée par le choix des surfaces de section des passages (34) de telle sorte que le transport du mélange gazeux et/ou le transport des fragments moléculaires gazeux à travers le corps solide (28) aient lieu presque exclusivement par diffusion le long des surfaces des passages et
- un dispositif de chauffage (30) pour chauffer le corps solide (28).

2. Dispositif selon la revendication 1, caractérisé en ce que le dispositif de chauffage (30) chauffe le corps solide (28) à une température, qui se trouve au-dessous de la température de désorption du gaz du mélange gazeux (40) et/ou du fragment moléculaire qui doit traverser le corps solide (28), et qui se trouve au-dessus de la température de désorption d'au moins un autre gaz du mélange gazeux (40) et/ou d'au moins un autre fragment moléculaire gazeux.

3. Dispositif selon la revendication 1, caractérisé en ce que les vitesses de diffusion pour chacun des gaz (42,44) du mélange gazeux (40) et/ou pour chacun des fragments moléculaires gazeux sont différentes le long de la surface des passages (34) par suite du chauffage du corps solide (28) ou de la matière du corps solide (28) ou de la structure du corps solide (28), de façon que la séparation des gaz (42,44) et/ou des fragments moléculaires gazeux soit réalisée par l'utilisation de ces vitesses de diffusion différentes.

4. Dispositif selon l'une des revendications 1 à 3, caractérisé en ce que le corps solide (28) est constitué de matière inerte.

5. Dispositif selon l'une des revendications 1 à 3, caractérisé en ce que le corps solide (28) est constitué d'une matière catalytique.

6. Dispositif selon l'une des revendications 1 à 5, caractérisé en ce que le corps solide (28) est constitué de platine.

7. Dispositif selon l'une des revendications 1 à 6, caractérisé en ce que le corps solide (28) est un corps fritté, dans lequel les passages (34) sont formés par les interstices entre les particules (32) de la matière frittée.

8. Dispositif selon l'une des revendications 1 à 6, caractérisé en ce que le corps solide (28) est un corps enroulé, qui est constitué d'une bande de matériau à structure mince enroulée.

9. Procédé pour séparer des gaz dans des mélanges gazeux et/ou des fragments moléculaires gazeux créés par une dissociation au niveau des surfaces à l'aide d'une diffusion superficielle, dans lequel
- le mélange gazeux (40) et/ou les fragments moléculaires gazeux est transporté à travers un corps solide absorbant les gaz (28) qui est traversé par une pluralité de passages (34) dont les surfaces de section transversale sont choisies de telle sorte que le transport du gaz et/ou le transport des fragments moléculaires gazeux à travers le corps solide (28) aient lieu essentiellement exclusivement par diffusion le long des surfaces des passages et que la séparation des gaz (42,44) et/ou des fragments moléculaires gazeux soit réalisée par l'utilisation de leurs vitesses de diffusion différentes et
- le corps solide (28) est chauffé au moyen d'un dispositif de chauffage (30).

10. Procédé selon la revendication 9, caractérisé en ce que le corps solide (28) est chauffé dans un mélange gazeux (40) existant de deux gaz (42,44) ou de deux fragments moléculaires gazeux ou d'un gaz et d'un fragment moléculaire gazeux à une température qui est comprise entre les températures de désorption des deux gaz (42,44) ou des deux fragments moléculaires gazeux ou du gaz et du fragment moléculaire gazeux.

11. Procédé selon l'une des revendications 9 ou 10, caractérisé en ce que la séparation des gaz et/ou des fragments moléculaires gazeux est réalisée par l'utilisation des vitesses de diffusion superficielle différentes dues au chauffage du corps solide (28) ou de la matière du corps solide (28) ou de la structure du corps solide (28).

12. Procédé selon l'une des revendications 9 à 11, caractérisé en ce que les fragments moléculaires et/ou des combinaisons de fragments moléculaires après le transport à travers le corps solide (28) se désorbent en traversant.

13. Procédé selon l'une des revendications 9 à 12, caractérisé en ce que les propriétés de diffusion, en particulier la propriété de diffusion du gaz adsorbé à transporter et/ou des fragments moléculaires gazeux à transporter sont influencées au fur et à mesure que la surface des passages est modifiée par du gaz adsorbé et/ou des fragments moléculaires gazeux.
